# EUROPEAN PATENT SPECIFICATION

(11) **EP 1 065 921 B1**
(45) Date of publication and mention of the grant of the patent: **12.05.2004**
(21) Application number: 98940541.0
(22) Date of filing: 27.08.1998
(51) Int. Cl.: A01G 1/00

(54) **METHOD AND APPARATUS FOR CREATING AREAS OF GREENERY**
VERFAHREN UND VORRICHTUNG ZUR BILDUNG VON GRÜNFLÄCHEN
PROCEDE ET APPAREIL SERVANT A FORMER DES ZONES DE VERDURE

(30) Priority: 02.04.1998 IL 12393198
(43) Date of publication of application: 10.01.2001
(73) Proprietor: Grass in the Air Ltd, 64163 Tel Aviv (IL)
(72) Inventor: SARDAS, Yehuda, 63566 Tel Aviv (IL)
(74) Representative: Long, Giorgio
(86) International application number: PCT/IL1998/000416
(87) International publication number: WO 1999/051080

(56) References cited:
- WO-A-94/09613
- WO-A-96/20586
- DE-A- 1 906 219
- DE-A- 2 729 405
- DE-A- 3 828 843
- DE-A- 3 904 737
- FR-A- 2 331 278
- FR-A- 2 740 151
- US-A- 4 058 930
- US-A- 5 345 713
- US-A- 5 651 213

## Description

The invention relates to the creation of areas of cultivation, typically but not exclusively, areas of greenery and/or turf, on surfaces of buildings, or, in general, any flat and level surface. More particularly, it relates to a method and apparatus for applying previously grown carpets of greenery to level,e.g building surfaces and maintaining them by cultivation operations, as required, without the need of providing layers of soil on said surfaces.

### Background of the Invention

The provision and cultivation of areas of greenery, such as turf carpets, on building roofs and other surfaces, serves both esthetic and functional purposes. Greenery imparts to buildings a more attractive aspect, and is restful to the inhabitants of the building. When it permits strolling and/or sitting on it, it diminishes the stressful and almost claustrophobic feelings that adjacent, high rise buildings create in modem cities. Further, it has important functional advantages, such as thermal insulation, protection against excessive heating or cooling of ceilings, and the like. There is, therefore, an increasing demand for more efficient and economical methods and apparatus for providing areas of greenery on buildings. Additionally, the possibility of carrying out cultivation of any kind, including the cultivation of vegetables or "down to earth" fruit, on non-soil surfaces, such as, but not only, building surfaces, has a strong economical interest.

USP 5,287,650 describes and claims a structured medium for the cultivation of greenery. Its discussion of the prior art is incorporated herein by reference. Said prior art comprises the laying of earth on a roof of a building in order to create an artificial bedding soil, and, alternatively, the creation of beds for cultivation by hydroponic means.

Hydroponic grass-growing units are described, e.g., in U.K. patents GB 2 030 832 B and 2 030 835 B. Hydroponic cultivation, however, does not create the desirable beds of grass or other greenery on which a person can lie or stroll and is not easily carried out in a residential environment. On the other hand, laying an earth bed on the roof of a building creates an undesirable load on it, and requires the provision of means to prevent damage to the building's structure. Neither of the aforesaid means, therefore, is a satisfactory solution to the problem of providing greenery beds on buildings.

USP 4,364,197 discloses a carpet for providing pregrown turf or the like, which comprises two layers of nonwoven cloth, with which a layer of grass seeds is provided. The grass seeds germinate and a turf carpet is thus produced, which, however, must then be laid on graded land, whereafter the root system, that was growing on water, grows on the soil.

USP 5,205,068 describes a method for cultivating turf so that the same may be transferred from the cultivation site to a permanent location. The method comprises providing a close mesh base and a base support of sand or sand/aggregate mix, and supporting this latter on a plastic sheet. Grass seeds are introduced to said mesh and sprayed with water. Once the grass has grown, the mesh can be lifted with the grass roots entwined with it and transported to a permanent site.

For the purpose of overcoming the drawbacks of the prior art, USP 5,287,650 proposes a structured medium for the cultivation of greenery which comprises three vertically stacked layers, of which at least the top two consist primarily of synthetic fibers. The bottom layer is a drainage layer. The middle layer is a protection layer for supporting the roots of the greenery. The top layer is a cultivation layer which does not contain soil and in which seed may be sown and germinate and the grown grass and/or plants may be cultivated. It is made of non-woven fabric, optionally including water-absorbent fibers. It must have a very carefully controlled structure and properties, since it plays an instrumental role in the germination of seeds.

To use the aforesaid medium on the surface of a building, in order to create a greenery area, the drainage layer is laid first on said surface, the protection layer is laid over it, and finally, the cultivation layer is laid as the topmost one. Grass and other plant seeds are then sown onto the cultivation layer, allowed to germinate, and subjected to all the operations needed to facilitate said germination and growth.

The aforesaid way of providing a layer of greenery on buildings is, however, complicated and of uncertain result, as the germination of seeds on such artificial surfaces, in an environment that is neither an agricultural nor a conventional hydroponic one, requires expert attention, and the germinated grass can be easily damaged.

WO 89/04600 discloses a plant-growth trough for earth-less growing of plants in planting sacks or growth plates, characterized in that each section beyond at least one bottom discharge of the plant-growth trough includes at least one drainage in a more elevated position determining the liquid level in the section when the bottom discharge is plugged, and that the bottom discharge as well as the more elevated drainage are in communication with discharge channel separated from the trough. This plant-growth trough is not adapted to provide a layer of vegetable growth on a building.

It is therefore a purpose of this invention to provide a method and apparatus for creating areas of greenery on building surfaces, which is free of the drawbacks of the prior art.

It is another purpose of this invention to provide such a method and apparatus which do not require the creation of soil beds on building surfaces.

It is a further purpose of this invention to provide such a method and apparatus which do not require the planting of seeds and the provision of the care required to assist their germination in residential spaces.

It is a still further purpose of this invention to provide such a method and apparatus which protect the building surfaces, onto which greenery surfaces are created, from being damaged by the greenery itself or by the operations required for its maintenance.

It is a still further purpose of this invention to provide such a method and apparatus which result in greenery carpets of desirable compactness and attractive appearance.

Other purposes and advantages of the invention will appear as the description proceeds.

### Summary of the Invention

The method of the invention for creating areas of vegetable growth or greenery is defined in claim 1.

It should be understood that, while a natural soil bed is preferred for growing the layer of vegetable growth, carpet components constituted by a growth which has fully exposed roots could be obtained by growing the desired vegetable on an artificial bed, from which the vegetable growth may be detached by merely lifting it.

Hereinafter, for purposes of description, reference will be made to grass as the vegetable growth, but this should be understood to be a preferred example and not a limitation.

The said porous bed is preferably saturated with water up to a predetermined level and drainage means are provided for draining water from said bed at said level, whereby to maintain a layer of said porous bed having open, aerated pores. Of course, said aerated layer of the porous bed may be moist, due to the irrigation or to evaporation from the saturated water layer, and further the porous bed may adsorbe different amounts of water, depending on its physical properties. Thus, the fact that a layer is "aerated" does not mean that it is free from any moisture level.

The areas of vegetable growth, such as grass or other greenery, according to the invention, are created on any flat, level surface. An example of such a surface is a surface of a building, such as a roof, etc., or any surface that has been prepared for this purpose, e.g., by leveling it with a concrete cast. Furthermore, the surface on which the area is to be provided may be renderded water impermeable by any suitable technique, e.g., by providing a bottom sheet of plastic or other impermeable material on which the particulate material is positioned, or by applying to it a layer of water impermeable material.

The vegetable growth, which is preferably grass, may also be a horticultural vegetable, for example, tomatoes, watermelons, melons and the like. To grow horticultural vegetables on building surfaces, is in itself a novelty in the art.

A "carpet" and a "carpet component" is a layer of intertwined roots, stems and leaves of the plants which constitute the desired growth, in the absence of soil, which has been removed (if any), preferably by washing, from the piece of the corresponding layer of vegetable growth, after it has been detached from the bed on which it was grown.

Said pieces of the layer of growth, and correspondingly the carpet components, may have any shape, though they usually rectangular, and may have any dimensions adapted to the dimensions of the area of greenery that is to be created. For example, one carpet component may have the same area as the container on which it is laid. Since, for convenience of description, all the growth that is supported by a container will be designated by the term "carpet", each carpet may be formed by one carpet component having the same area as the container, or, alternatively, by a plurality of smaller carpet components laid in abutment the one with the other.

It should be understood that the term "container", as used herein, designates any structure that can retain therein water and consequently a porous bed containing water. Such an element may a) comprise a bottom and side walls connected thereto, viz. have a basin-like structure; b) be constituted by an independent bottom such as a sheet of waterproof material and a border formed around it, e.g. by a number of border walls, defining a basin-like space; c) be constituted by an area of a surface, particularly of a building, waterproofed, on which a carpet is to be laid, and a border formed around it, e.g. by a number of border walls, said surface area constituting a bottom; or d) be formed on the surface, on which a carpet is to be laid, by a depression having a bottom and a border. The term "container" in this specification and claims should always be understood to include all the aforesaid variants, and in general any structure or means (generally defining a basin-like space) that can retain therein water, and consequently retain a porous bed filled with water, and which further comprises drainage means, such as orifices, at a predetermined height, as further explained herein - unless a narrower construction of the term is specified.

If the container has a basin-like structure, comprising connected bottom and border, the provision of the desired greenery area is effected by placing in it the porous bed and the carpet and then placing the whole on the surface, for which it is intended, in any desired position, as long as it is horizontally balanced and level; or, alternatively, the porous bed and/or the carpet may be laid in the container after this latter is placed on the surface. The surface, as has been said, may be a building surface. It can also be an artificial surface other than that of a building, or a natural surface that is or has been rendered level. If the container is defined by a bottom and border not structurally connected, as when the bottom is a waterproof sheet or is an area of the building surface, it will be completed by providing, if necessary, the border walls, and then the porous bed and the carpet will be placed into the thus completed container.

The porous bed, on which the carpet is laid, is preferably made of particulate inert material, which can also be a mixture or blend of two or more different materials. Two particular such materials are tuff and perlite. Another suitable material is Leca (Manufactured by Leca S.p.A., Milan, Italy). The particulate material is preferably, but not necessarily, laid in at least two tiers, the lower tier having preferably a larger particle size than the upper one. In any case, drainage openings are provided at a level intermediate between the top and the bottom of the porous bed to divide said bed (regardless of the number of tiers of which it is comprised) into a bottom layer containing a liquid (which is generally water or an aqueous solution, applied by watering the grass carpet or in other ways) and an upper layer, the pores of which are free of liquid and are open and aerated, viz. filled with gases or vapors. The grass roots extend into the upper layer and become entwined with it. The grass roots may, to some small extent, also intertwine with particulate material from the lower layer.

According to a particular preferred embodiment of the invention, the upper tier is provided within a meshed structure that may have a small area. In this way, the upper tier can be made modularly of small areas of particulate beds, laid side by side, which facilitates the setting up of the surface. Additionally, since the upper tier is essentially contained in a meshed structure, the roots of the greenery enter this structure and are eventually intertwined with it. After a short period, the grass surface bacomes inegral with the meshed structure and the particulate material, forming "greenery elements" containing the greenery, the roots and the upper tier of particulate material. This makes it possible to handle the resulting area of greenery in a "modular manner", e.g., for maintanance, by removing only modular sections thereof, while mainitaning its homogeneous appearance when in regular use. The meshed structure, of course, allows for the passage of water without any hindrance. The above modular upper tier, as well as the resulting modular greenery areas, also form a part of the present invention.

The treatment to which the greenery carpet is subjected after being put in place includes, besides watering, the treatments that are generally applied to similar greenery, when cultivated in the conventional way. For instance, fertilizers are applied to it. Protective chemicals, such as weed killers and/or pesticides, may also be applied. Preferably, the temperature of the water used for irrigating the greenery is controlled, to maintain the temperature of the carpet within optimal limits; and for this purpose, heating means are provided and activated in the appropriate seasons, to prevent the temperature of the greenery carpet from becoming too low.

The apparatus according to the invention comprises a container (as hereinbefore defined) and a bed of an inert, porous material contained in it. The container is provided with drainage apertures to maintain the water inside the container at a predetermined level, to provide a top layer of porous material having liquid-free, aerated pores, as above set forth. Means are provided for irrigating the greenery carpet. The apparatus may preferably further comprise means for controlling the temperature of the container contents and of the greenery carpet, or at least to the roots thereof, whenever the season requires it. The temperature controlling means preferably comprise a heater, a heat exchanger for heating water to the desired temperature, and a system of pipes which lead the heated water to appropriate positions in the container or lead the heated water to drip on and/or under the greenery carpet. Heating water may be dripper, e.g., using a flexible rubber or plastic pipe (e.g., standard 16 mm diameter pipe) with dripping/tapping orifices, positioned under the carpet.

### Brief Description of the Drawings

In the drawings:
- Fig. 1 is a schematic top view of an apparatus for cleaning pieces of greenery layer from the soil, to provide carpet;
- Fig. 2 is vertical, longitudinal cross-section of the apparatus of Fig. 1;
- Fig. 3 is a perspective view from the top of a container used according to an embodiment of the invention, illustrated as empty;
- Fig. 4 is a cross-section of the container of Fig. 3, illustrated as containing the porous layers and the carpet, taken on the plane IV-IV of Fig. 3;
- Fig. 5 is a partial cross-section of said container, with the porous layers and the carpet, taken on plane V-V of Fig. 3, at an enlarged scale;
- Fig. 6 is a schematic illustration of a system for the controlling the water temperature;
- Fig. 7 is a photograph showing from the bottom pieces of a layer of grass as it is when detached from the soil in which it has been grown, together with portions of soil attached to them;
- Fig. 8 is a photograph showing from the bottom the carpet components obtained from the pieces of layer of grass of Fig. 7 by removing the soil from them;
- Fig. 9 is a photograph showing a piece of carpet produced and cultivated according to an example of the invention, folded over to show its underside; and
- Fig. 10 is an enlargement of the portion of carpet piece marked on Fig. 9.

### Detailed Descrintion of Preferred Embodiments

The first step of the method according to the invention is the growth of a vegetable layer, e.g., in the embodiment described, a grass layer, on appropriate fertile soil. This is a normal agricultural operation, and does not require to be illustrated. At the end, a layer of greenery - a turf, in the embodiment illustrated - with the soil on which it is grown, is produced. The turf is cut into pieces, the shape and size of which are not critical, but which may be e.g. square or rectangular pieces having sides of a few centimeters, e.g. 7 to 10 cm. which are detached from the earth bed and which comprise, - when the bed is a natural one, as it is hereinafter assumed to be - a certain depth of soil, of e.g., 10 cm or more. This is common procedure in making turf areas instead of by sowing and germinating *in situ*, by transporting and laying turf pieces, separately grown on fertile soil. Therefore, no illustration of this conventional step is required.

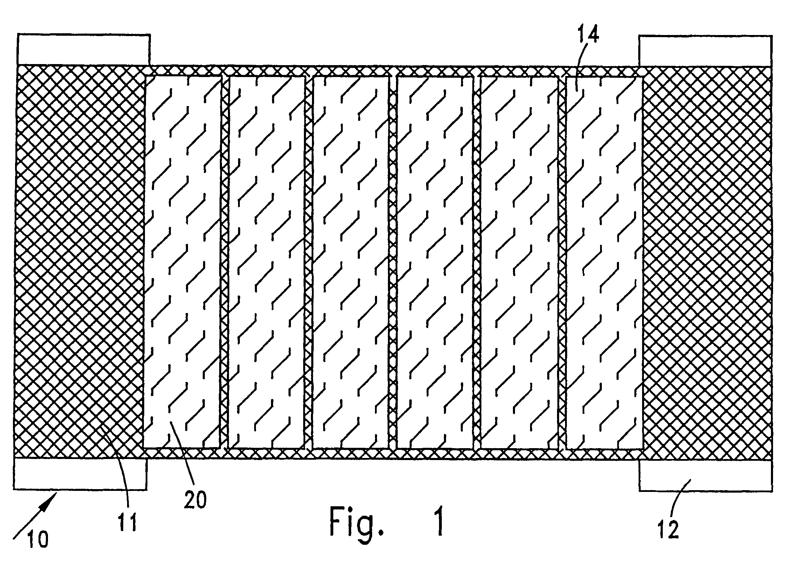

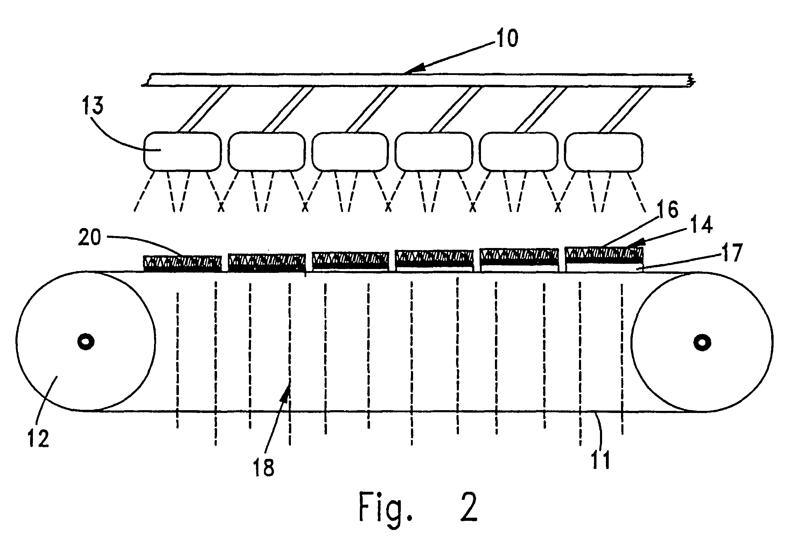

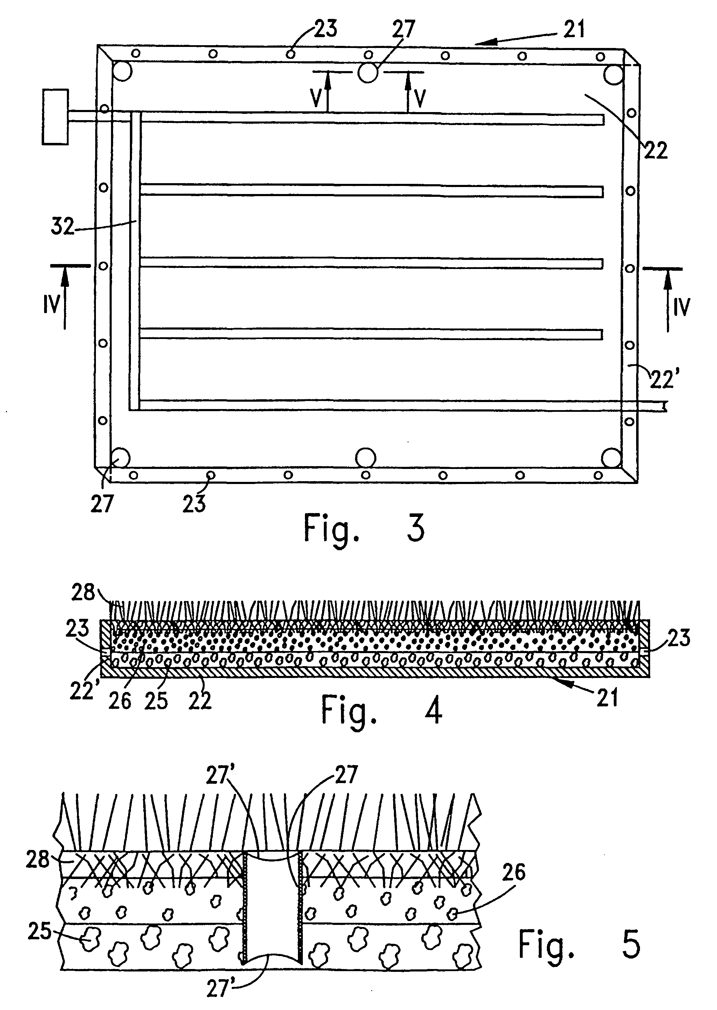

In the second step of the method, the turf pieces are washed to remove the soil from it, if any is attached to it, to produce carpet components, as herein defined. This step is illustrated in Figs. 1 and 2.

In said Figs. 1 and 2, numeral 10 generally indicates an apparatus for removing the soil from the turf pieces to provide carpet components. Apparatus 10 comprises, in its most schematic form, a closed loop 11 of suitably apertured material, such as a net, permitting drainage of water and soil entrained by it, which loop 11 is supported and actuated for motion in the direction of the arrows by rollers 12 and any suitable motor means, not shown. The apparatus further comprises water sprayer apparatus, schematically illustrated as comprising nozzles 13, and means, not shown, for supplying water under pressure to said nozzles. Turf pieces, indicated at 14, are placed on net loop 11 and are transported by it. Each turf piece 14 has been cut to the desired dimensions and comprises a topmost layer 16, consisting, in this embodiment, of intertwined grass roots, stems and leaves, and an underlying layer of soil 17, the roots of layer 16 extending into soil layer 17. As the turf pieces 14 advance with net 11, they are sprayed with water from nozzles 13, and the soil layer 17 is gradually washed away from them, as schematically indicated in the drawing at 18. The depth of the soil layer 17 correspondingly decreases, as shown in the drawing, until the soil has been completely removed, and at the end, the original turf pieces 14 have become carpet components 20, wherein the roots are completely exposed. The carpet components 20 are discharged from apparatus 10, stored if needed, and transported where the operations hereinafter described take place, by conventional means, which need not be described.

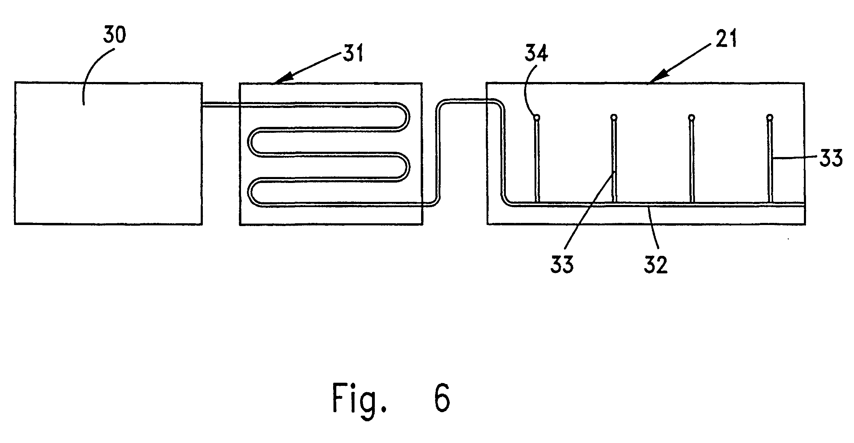

The container 21, which forms a part of the apparatus according to this embodiment of the invention, is a shallow basin-like body, preferably of rectangular shape in plan view, as shown in Fig. 3. The container is preferably made of sheet metal, e.g. sheet aluminum or iron conveniently treated for protection against rust, for example, by a zinc coating, having a thickness e.g. of about 275 micron, or more and comprising a bottom 22 and a border formed by walls 22', which have a height of a few centimeters, e.g. from 5 to 12 cm or more. According to another preferred embodiment of the invention, the greenery and the particulate layers are not positioned within a container, but are laid directly on the surface, and the whole greenery area is boardered by a sheet of strong material. In addition to the abovementioned materials, Perspex ca also be conveniently used as the boardering material. The shape of the container depends on the particular surface on which it is intended to place it, but it is typically rectangular. As has been said, the container might be constituted by a bottom and a border not structurally connected, and the bottom might be constituted by a waterproof sheet, e.g. a bitumen layer or sheet or bitumenized sheet, or by the surface of the structure, e.g. building, on which the carpet components are to be laid. A weaterproof sheet may be laid, to form the container bottom, over a waterproofed area of the building surface.

Each border wall of the container 21 is provided with orifices 23 for the drainage of water, which are placed at a height that depends on the level which it is desired that water, filling the empty spaces in the porous layer, should reach within the container. The distances and diameters of the orifices should be such as to guarantee an adequate drainage. By way of example, and for this purpose, the diameter of the drainage orifices may be from 5 to 20 cm, and the distance between two successive orifices may be such as to provide 2 openings per 1.5 sq. mt. of container or thereabout. They are placed at a height of a few centimeters, preferably from I to 5 cm., and preferably for many applications, about 4 cm, from the bottom of the container, creating a lower porous layer, having a depth equal to said height, which is filled with water or aqueous solution up to that level, and above it, an upper liquid-free, porous layer, preferably having as depth from 5 to 12 cm or more, depending on the height of the bordering material (and which, as explained above, is not necessarily free from moisture, but does not contain a layer of water).

Numeral 27 indicates pipes which serve for the introduction of fertilizer. As seen in Fig. 3, in which their top openings are shown, they are located at the comers and along sides of the containers 21. One of them is seen in cross-section in Fig. 5. They have a diameter in the order of tens of millimeters, e.g. about 40 mm, are slightly shorter than the depth of the containers 21, and have concave ends, as shown at 28', to facilitate the passage of fertilizer out of them. Their upper openings can also be provided with funnels, or funnels can be used in connection with them, if desired. The fertilizer. is introduced from the top and issues from the bottom thereof, so as to mix with the water and the perlite or other porous material in the container.

The container can be placed on any flat surface, artificial, e.g. a surface of a building, or not artificial.

As seen in Fig. 4, the container is filled, in this embodiment, with particulate, porous material, which may be constituted, for example, by tuff, perlite or leca, or by mixtures or blends thereof. Said particulate material is preferably laid in two tiers 25 and 26 of different particle size. However, a single particulate material, viz. a single tier, could be used. For example, if the material is tuff, the bottom tier 25 is constituted by particles having a size of about 10-20 mm and has a depth of about 3 cm, whereas the second tier 26, laid on top of the first, has a depth of about 4 cm and is constituted by particles of a size up to 4 mm. The bottom tier has a weight of 850-950 grams per liter and the top tier has a weight of 1300-1400 grams per liter. If the porous material is perlite, then the depth of the tiers is the same as in the case of tuff, but the bottom tier -is made of particles having a size of about 0.4 mm, its weight being about 10 grams per liter; and the top tier is made of particles having a size of about 0.2 mm, its weight being of 5 g per liter. It should be understood, however, that the above figures constitute only an example and are not limitative in any way. In the case that perlite is used, retaining means, e.g., made of geothermic, e.g. water resistant, fabric, are placed within the container over the orifices to prevent loss of perlite through the drainage orifices and/or clogging of said orifices by the perlite. A mesh of water resistant fabric may also be placed within the said top layer of particulate material or immediately above it.

As has been said, the level of the drainage orifices divides the particulate material into two layers, a lower one saturated with liquid and a liquid-free upper one (as hereinbefore defined). When two (or more) tiers of different particulate material are provided, as in this embodiment, the tiers coincide or not with said two layers according to whether the drainage orifices are placed at the level between the two tiers or at a different level. Therefore it should be understood that the distinction between "tiers" is based on the particulate material of which they consist (and if only one material is used, there is only one tier) while the distinction between "layers" is based on the presence or absence of liquid in the spaces defined between particles of the particulate material, and therefore on the level of the drainage orifices. Once again, it should be noted that moisture can be present also in drained layers of particulate material, as explained hereinbefore.

The turf carpet, in this example, grass carpet, indicated in the drawings at 28, is laid on top of the uppermost layer, in this embodiment on top of tier 26. The roots of the grass extend into said layer and become entwined with it. They do not extend significantly below the level of the drainage orifices, either because they tend to rot or their development essentially stops when they penetrate into a water mass.

Watering or irrigation means must be provided, and the watering is effected essentially in the same way as it would be on a normal turf grown on fertile soil. Irrigation means used in the art can be used in this case, as well. They may be spray nozzles, located in the bed below the vegetable layer and extending above it, as are conventionally used to irrigate turf, or other means, such as e.g. underground irrigating systems, may be used. All such watering means need not be described, because they are conventional and a considerable variety of them is known in the art. The irrigation systems, whether internal or external to the container, whether associated to a single container or to a plurality of them, can be automatically controlled, once again as in conventional irrigation.

Preferably, however, irrigation means are provided the operation of which can be adjusted according to the different seasons, e.g., summer, by which the warmer months are generally designated, and winter, by which cold months are generally designated. The roots of the carpet growth should be kept at an optimal temperature, generally in the range of 18°C to 22°C. In winter, this requires heating the irrigation water. For this purpose, as shown schematically in Fig. 6, a heater 30 is provided, which heats the irrigation water through a heat exchanger schematically indicated at 31. A pipe system, comprising for instance polyethylene pipes having a diameter of 12-16 mm, is provided within the container. E. g. the system may have, as in this embodiment, a comb-like structure, comprising a manifold 32 and a number of derivations 33, each leading to an underground aperture or nozzle, schematically indicated at 34. Water from the heat exchanger is caused to flow through said pipe system, and provides the desired heat to the underside of the turf bed carpet

Additional treatments, as has been said, are desirably carried in order to maintain the greenery carpets in the best condition and prevent wilting by lack of nourishment or attack by damaging organisms, whether vegetable or animal. For instance, fertilizer may be applied every six months. As fertilizers can be used, for example, those designated by the trade name LEVATIT HD-5, MULTICOTE, and OSMOCOTE, or other suitable fertilizers available on the market.

As has been said, although the creation of turf carpets on a building surface is the most common and typical application of the invention, it can be applied for the cultivation of horticultural vegetables. The process steps and the apparatus are essentially the same as hereinbefore described.

### Example

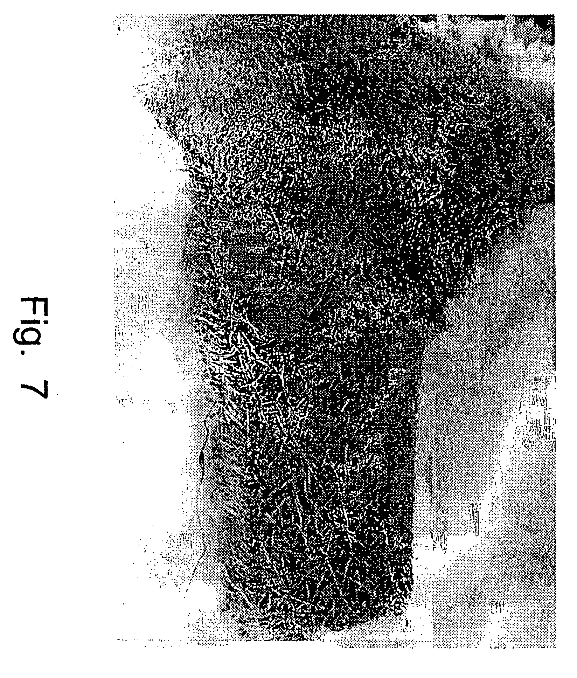

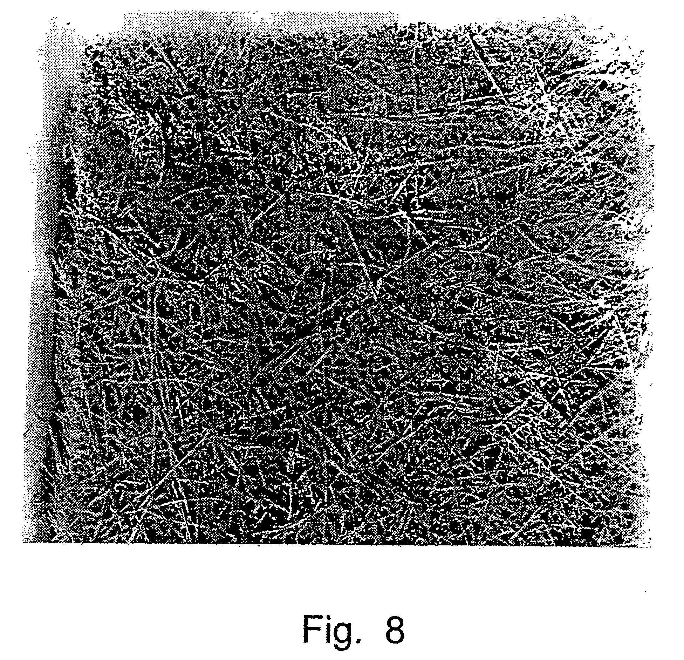

El Toro grass was grown in a conventional manner to form a turf and was then treated as follows. The soil adhering to the grass roots was removed by an apparatus as described with reference to Figs 1 and 2, to provide carpet components. The underside of the pieces of El Toro grass turf is shown before the removal of the soil in Fig. 7 and after said removal in Fig. 8.

A rectangular container of zinc coated sheet aluminum, having a thickness of 3 mm, was prepared. It had dimensions of 8x5 meters and had peripheral walls 10 cm high. Drainage orifices having a diameter of 20 mm were formed in each wall at a height of 4.5 cm from the inner surface of the container bottom to the center point of the drainage orifice. Each container was filled with a porous bed comprising a bottom tier of perlite and having a height of 3.5 cm, and a top tier of perlite, laid on top of the bottom tier and having a height of 7 cm. Since the top of the bottom tier was at the same level as the bottom of the drainage orifices, said bottom tier constituted the bottom layer, saturated with water, of the porous bed, and the top tier constituted its drained top layer. Each container was further provided with a horizontal tapping network of flexible plastic pipes having an inner diameter of 16 mm, connected to a heat exchanger for feeding heated water. The plastic pipes had tapping holes every 30 cm. The tapping pipes were placed in the container within a height of 3.5 cm from the inner surface of the container bottom.

The carpet components were laid in said container, juxtaposed to one another, on top of the top tier of perlite and the container was placed on a flat rooftop in the city of Tel-Aviv The turf was cultivated as follows. It was intermittently watered by means of a computer controlled water spray having a usual flow rate - 10 minutes at 5 AM and 10 minutes at 8 PM. During the months of December 1997 through May 1998 heated water was circulated through the aforesaid network of tapping plastic pipes, said water having a temperature and a flow rate such as to maintain the temperature in the top tier of perlite, automatically controlled by a thermostat, at 18° C. 20-20-20 fertilizer (which is 20% N, 20%P₂O₃,20%K₂O) was applied to the turf during the months of July 1997 and July 1998, in each year in an amount of 0.05 kg/sqmt.

It was found that the resulting grass carpet has all the properties of a flourishing turf grown on natural soil. Furthermore, it was found that it was highly consistent, so that it could be walked upon like a natural turf, and could be lifted from the containers, e.g. to effect maintenance thereof, and then replaced, by rolling and unrolling, without being damaged. This was due to the fact that the grass roots were intimately entwined with the perlite of the top tier, but did not significantly reach into the bottom tier, as they tended to rot and/or were unable to further develop once they penetrated into the watery layer that permeated said bottom tier. The grass carpet was an efficient heat insulator of the roof on which it was laid.

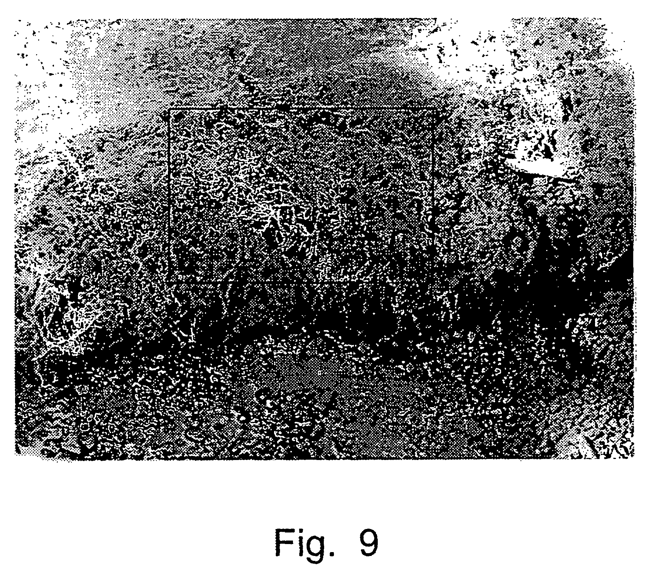

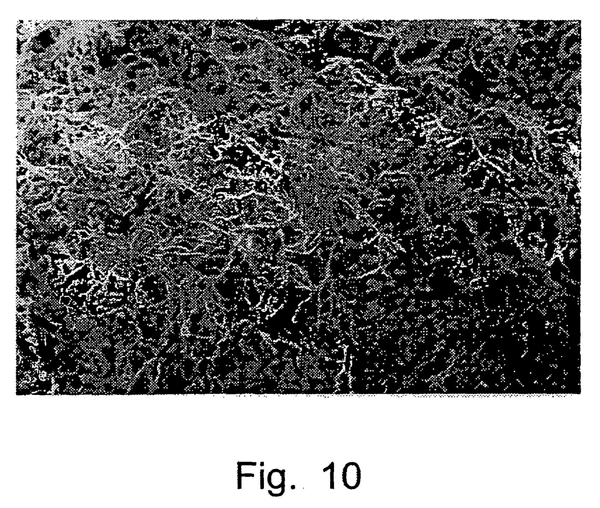

The structure and properties of the grass carpet obtained according to the invention are illustrated by Figs. 9 and 10. Fig. 9 shows an edge of the carpet, folded over to show its underside. The bottom layer of tuff and the water permeating it are seen in the photograph. The portion of grass carpet underside set off by a rectangle in Fig. 9 is seen enlarged in Fig. 10. It is seen that fine roots have germinated beyond the original roots seen in Fig. 8 and have become intertwined with the porous material (tuff) of the top layer, which is retained by them and is lifted with them when the carpet is folded over. Grass carpet and porous material are thus combined in a coherent structure that is stable and can be transported, if desired, and replanted at another location. Such a coherent, combined structure is a novelty in itself and is unknown to the art and is not obtainable by any prior art method or apparatus. Therefore it is a part of the invention.

These properties of the grass carpets of the invention are important in facilitating maintenance of the building surfaces on which they are laid. For instance, if the bottom of the container or containers is constituted by an area of a building surface, and if said surface requires, for instance, renewed or improved waterproofing, it is sufficient to roll up the grass carpet to expose the said area, to carry out the desired maintenance operation (e.g., cleaning it and then applying to it a fresh layer of asphalt or tar) and then unroll the carpet back to its original position. Such a maintenance method of building surfaces covered with greenery is novel and could not be carried out by means known in the art.

Although an examples of the invention have been given by way of illustration, it will be understood that the invention may be carried out with many variations, modifications and adaptations, such as hereinbefore mentioned or within the understanding and ability of skilled persons, without departing from the scope of the claims.

## Claims

1. Method of creating cultivation areas on flat, level surfaces, which comprises the steps of:
I - growing a layer (14) of a desired vegetable growth on a soil bed (17) selected from among a natural bed and an artificial bed;
**characterized in that** it further comprises
II - detaching pieces of said layer, having any desired dimensions, and removing from them said soil, if any so as to produce carpet components (20) of said vegetable growth which has fully exposed roots;
III - providing a carpet container (21) able to retain water;
IV - laying a bed of inert porous material (25, 26) in said container;
VI - laying said carpet components on said porous bed; and
VII - cultivating the vegetable growth (23) of said carpet components by watering it and subjecting it to treatments, that are generally applied to vegetable growth, when cultivated in the conventional way.

2. Method according to claim 1, wherein the layer (14) of a desired vegetable growth is grown on natural soil and the carpet components (20) are produced by detaching the pieces of the vegetable growth layer together with the layer of soil in which the roots of the growth are embedded, and removing said layer of soil from said pieces, or wherein the roots are provided in a substantially clean, soil free form, by any other suitable method.

3. Method according to claim 1, which comprises draining liquid from the porous bed (25, 26) at a level (23) between the top and the bottom of said bed, whereby to divide it into a bottom layer containing said liquid and a top layer drained from said liquid.

4. Method according to claim 1, wherein the vegetable growth (28) is selected from the group consisting of grass and horticultural vegetables.

5. Method according to claim 4, wherein the horticultural vegetables are selected from the group consisting of tomatoes, watermelons and melons.

6. Method according to claim 2, wherein the soil is removed by straying from the layer (14) of vegetable growth.

7. Method according to claim 1, wherein the flat surface 3 are artificial surfaces.

8. Method according to claim 7, wherein the artificial surface is a surface of a building.

9. Method according to claim 1, wherein the pieces of layers of vegetable growth, and therefore the corresponding carpet components (20) have shape and dimensions adapted to the dimensions of the area of vegetable growth that is to be created.

10. Method according to claim 1, wherein each portion of vegetable growth (28) has the same area as a growth container.

11. Method according to claim 1, wherein a plurality of vegetable growth portions, laid in abutment with one another, collectively have the same area as a growth container (21).

12. Method according to claim 1, wherein the porous bed (25, 26) is of particulate inert material.

13. Method according to claim 12 wherein the particulate inert material is selected from the group consisting of tuff, perlite, leca, or blends or mixtures of such materials.

14. Method according to claim 13 wherein the material is laid in at least two tiers, the lower tier having a larger particle size than the upper one (26).

15. Method according to claim 1, wherein the vegetable growth (28) is subjected, after being put in place, to the treatments that are generally applied to similar growth, when cultivated in the conventional way.

16. Method according to claim 15 wherein the treatments comprise the application of fertilizers.

17. Method according to claim 15 wherein the treatments comprise the application of weed killers and/or pesticides.

18. Method according to claim 1, further comprising controlling the temperature of the water used for irrigating the vegetable growth (28), to maintain the temperature thereof within optimal limits.

19. Method according to claim 18, comprising heating the water in the cold season.

20. Apparatus for carrying out the method of creating cultivation areas on flat level surfaces according to claim 1, which comprises a container (21) and a bed of inert porous and particulate material (25, 26) contained therein,
wherein the container is provided with drainage apertures (23) thereby to divide the bed into a bottom layer containing water or an aqueous solution and a top layer that is drained of liquid, **characterized in that** a mesh of a water resistant fabric is placed within said top layer or immediately above it.

21. Apparatus according to claim 20, wherein the drainage apertures (23) are placed at such a height as to divide the porous bed into a bottom layer having a depth from 1 to 5 cm and a top layer having a depth from 5 to 15 cm.

22. Apparatus according to claim 20, further comprising irrigation means.

23. Apparatus according to claim 20, wherein the porous bed (25, 26) comprises at least two tiers of inert, porous materials.

24. Apparatus according to claim 20, wherein the inert, porous materials are selected from the group consisting of tuff, perlite, leca, or mixtures or blends of such materials.

25. Apparatus according to claim 20, further comprising means for controlling the temperature of the container contents and of the roots of the vegetable growth, whenever the season requires it.

26. Apparatus according to claim 25, wherein the temperature controlling means comprise a heater (30), a heat exchanger (31) for heating water to the desired temperature, and a system of pipes which lead the heated water to appropriate positions in the container (21).

27. Apparatus according to claim 20, further comprising means for introducing fertilizers.

28. Apparatus according to claim 27, wherein the means for introducing fertilizers comprise pipes (27) having top openings for receiving the fertilizers and bottom openings for allowing the fertilizers to mix with the contents of the container.

29. Apparatus according to claim 20, wherein the container (21) comprises a bottom (22) and a border (22) constituted by side walls.

30. Apparatus according to claim 29, wherein the bottom (22) and the border (22') of the container are not structurally connected.

31. Apparatus according to claim 29, wherein the bottom (22) of the container is constituted by a waterproof sheet.

32. Apparatus according to claim 29, wherein the bottom (22) of the container is constituted by a waterproofed area of a building surface.

33. Use of particulate material (25, 26) for carrying out the method of creating cultivation areas on flat, level surfaces according to claim 1, wherein said particulate material is laid in a single tier (26) provided within a meshed structure that may have an area that is a fraction of the area of the greenery carpet

34. Use of a tier (26) of particulate material as claimed in claim 33, in the creation of a greenery carpet (20) modular element, in which the greenery has roots which are intertwined with said tier (26) of particulate material.

## Patentansprüche

1. Verfahren zum Erzeugen von Anbaubereichen auf flachen, ebenen Flächen, welches folgende Schritte umfasst:
I - Anzüchten einer Schicht (14) von gewünschten Pflänzlingen auf einem Bodenbett (17), das aus einem natürlichen Bett und einem künstlichen Bett ausgewählt wird;
**dadurch gekennzeichnet, dass** es des Weiteren umfasst:
II - Entfernen von Stücken dieser Schicht, die jede gewünschte Ausdehnung aufweisen und Beseitigen von etwa vorhandenem Boden von ihnen, so dass Teppichbestandteile (20) der Pflänzlinge erzeugt werden, welche vollständig exponierte Wurzeln aufweisen;
III - Bereitstellen eines Teppichbehälters (21), der Wasser halten kann;
IV - Einlegen eines Betts aus inertem, porösen Material (25, 26) in den Behälter;
V - Einlegen der Teppichbestandteile auf das poröse Bett; und
VI - Kultivieren der Pflänzlinge (23) der Teppichbestandteile durch Wässerung und Ausführung von Behandlungen derselben, die allgemein bei Pflänzlingen angewendet werden, wenn sie auf herkömmliche Weise angebaut werden.

2. Verfahren gemäß Anspruch 1, worin die Schicht (14) der gewünschten Pflänzlinge auf natürlichem Boden wächst und die Teppichbestandteile (20) durch Entfernen der Stücke der Pflänzlingsschicht zusammen mit der Bodenschicht, in welche die Wurzeln der Pflänzlinge eingebettet sind, und Beseitigen der Bodenschicht von den Stücken erzeugt werden oder worin die Wurzeln im Wesentlichen in sauberer, bodenfreier Form durch ein anderes geeignetes Verfahren bereitgestellt sind.

3. Verfahren gemäß Anspruch 1, welches das Ableiten von Flüssigkeit aus dem porösen Bett (25, 26) auf einer Ebene (23) zwischen der Oberseite und dem Boden des Betts umfasst, wobei dieses in eine Bodenschicht, die die Flüssigkeit umfasst, und eine obere Schicht, aus der Flüssigkeit abgeleitet ist, unterteilt ist.

4. Verfahren gemäß Anspruch 1, worin die Pflänzlinge (28) von der Gruppe, die aus Gräsern und Gartenbaupflanzen besteht, ausgewählt sind.

5. Verfahren gemäß Anspruch 4, worin die Gartenbaupflanzen von der Gruppe, die aus Tomaten, Wassermelonen und Melonen besteht, ausgewählt sind.

6. Verfahren gemäß Anspruch 2, worin der Boden entfernt wird durch Sprühen von der Schicht (14) der Pflänzlinge.

7. Verfahren gemäß Anspruch 1, worin die flachen Oberflächen künstliche Oberflächen sind.

8. Verfahren gemäß Anspruch 7, worin die künstliche Oberfläche eine Oberfläche eines Gebäudes ist.

9. Verfahren gemäß Anspruch 1, worin die Schichtstücke der Pflänzlinge und deshalb die zugehörigen Teppichbestandteile (20) Form und Abmessungen aufweisen, die an die Abmessungen der Bereiche der Pflänzlinge angepasst ist, die zu erzeugen sind.

10. Verfahren gemäß Anspruch 1, worin jeder Bereich der Pflänzlinge (28) die gleiche Größe aufweist wie der Pflanzbehälter.

11. Verfahren gemäß Anspruch 1, worin mehrere Pflänzlingsbereiche angrenzend aneinander verlegt werden, um gemeinsam die gleiche Fläche wie der Pflanzbehälter (21) aufzuweisen.

12. Verfahren gemäß Anspruch 1, worin das poröse Bett (25, 26) ein teilchenförmiges Inertmaterial ist.

13. Verfahren gemäß Anspruch 12, worin das teilchenförmige Inertmaterial ausgewählt wird von der Gruppe, die aus Tuff, Perlit, Leca oder Verschnitten oder Mischungen von diesen Materialien besteht.

14. Verfahren gemäß Anspruch 13, worin die Materialien in zumindest zwei Lagen eingelegt werden, wobei die untere Lage eine größere Teilchengröße als die obere (26) aufweist.

15. Verfahren gemäß Anspruch 1, worin die Pflänzlinge (28), nachdem sie an ihren Platz gebracht sind, den Behandlungen ausgesetzt werden, denen normalerweise ähnliche Pflänzlinge ausgesetzt werden, wenn diese in konventioneller Weise kultiviert werden.

16. Verfahren gemäß Anspruch 15, worin die Behandlungen die Anwendung von Dünger umfassen.

17. Verfahren gemäß Anspruch 15, worin die Behandlungen die Anwendung von Unkrautvernichtern und/oder Pestiziden umfassen.

18. Verfahren gemäß Anspruch 1, das weiter das Kontrollieren der Temperatur des Wassers umfasst, das zum Bewässern der Pflänzlinge (28) verwendet wird, um die Temperatur innerhalb optimaler Grenzen zu halten.

19. Verfahren gemäß Anspruch 18, das das Beheizen des Wassers in kalter Jahreszeit umfasst.

20. Vorrichtung zum Ausführen des Verfahrens zum Erzeugen von Anbaubereichen auf flachen ebenen Flächen gemäß Anspruch 1, welche einen Behälter (21) und ein Bett aus inertem, porösen und teilchenförmigen Material (25, 26) umfasst, das in diesem enthalten ist,
worin der Behälter mit Ableitöffnungen (23) versehen ist, um so das Bett in eine Bodenschicht, die Wasser oder eine wässrige Lösung enthält, und eine obere Schicht, aus der Flüssigkeit abgeleitet ist, zu unterteilen, **dadurch gekennzeichnet, dass** ein Netz aus wasserbeständigem Gewebe in die obere Schicht oder unmittelbar darüber gelegt ist.

21. Vorrichtung gemäß Anspruch 20, worin die Ableitöffnungen (25) in solch einer Höhe angeordnet sind, um das poröse Bett in eine Unterschicht mit einer Tiefe von 1 bis 5 cm und eine Oberschicht mit einer Tiefe von 5 bis 15 cm zu unterteilen.

22. Vorrichtung gemäß Anspruch 20, die weiter eine Wässerungseinrichtung umfasst.

23. Vorrichtung gemäß Anspruch 20, worin das poröse Bett (25, 26) zumindest zwei Lagen von inertem, porösen Material umfasst.

24. Vorrichtung gemäß Anspruch 20, worin das inerte, poröse Material ausgewählt wird von einer Gruppe, die Tuff, Perlit, Leca oder Mischungen oder Verschnitte von diesen Materialien enthält.

25. Vorrichtung gemäß Anspruch 20, die weiter Einrichtungen zum Kontrollieren der Temperatur der Behälterinhalte und der Wurzeln der Pflänzlinge umfasst, wann immer die Saison dies erfordert.

26. Vorrichtung gemäß Anspruch 25, worin die Temperaturkontrolleinrichtung eine Heizeinrichtung (30), einen Wärmetauscher (31) zum Erwärmen von Wasser auf die gewünschte Temperatur und ein Rohrsystem, welches das erwärmte Wasser zu den geeigneten Bereichen in dem Behälter (21) leitet, umfasst.

27. Vorrichtung gemäß Anspruch 20, die weiter eine Einrichtung zum Zuführen von Dünger umfasst.

28. Vorrichtung gemäß Anspruch 27, worin die Einrichtung zum Zuführen von Dünger Rohre (27) mit oberen Öffnungen zum Aufnehmen des Düngers und Bodenöffnungen zum Ermöglichen des Düngers, sich mit den Bestandteilen in dem Behälter zu mischen, umfasst.

29. Vorrichtung gemäß Anspruch 20, worin der Behälter (21) einen Boden (22) und eine Begrenzung (22'), die aus Seitenwänden besteht, umfasst.

30. Vorrichtung gemäß Anspruch 29, worin der Boden (22) und die Begrenzung (22') des Behälters nicht baulich verbunden sind.

31. Vorrichtung gemäß Anspruch 29, worin der Boden (22) des Behälters aus einer wasserdichten Bahn besteht.

32. Vorrichtung gemäß Anspruch 29, worin der Boden (22) des Behälters aus einem wasserdichten Bereich einer Gebäudeoberfläche besteht.

33. Einsatz von teilchenförmigem Material (25, 26) zum Ausführen des Verfahrens zum Erzeugen von Anbaubereichen auf flachen, ebenen Flächen gemäß Anspruch 1, worin das teilchenförmige Material in einer Netzstruktur vorhanden ist, die eine Fläche aufweisen kann, die eine Fraktion der Fläche des Pflanzteppichs ist.

34. Einsatz einer Lage aus teilchenförmigen Material nach Anspruch 33 bei der Erzeugung eines modularen Pflanzteppichelementes (20), wobei die Pflanzen Wurzeln haben, die mit der Lage (26) aus Teilchenmaterial verschlungen sind.

## Revendications

1. Procédé pour créer des zones de culture sur des surfaces plates de niveau, qui comprend les étapes consistant à :
I - cultiver une couche (14) d'une culture végétale souhaitée sur un lit de sol (17) sélectionné parmi un lit naturel et un lit artificiel,
**caractérisé en ce qu'**il comprend en outre les étapes consistant à :
II - détacher des morceaux de ladite couche, ayant les dimensions souhaitées, et retirer de ceux-ci ledit sol, s'il existe, afin de produire des composants de tapis (20) de ladite culture végétale qui a des racines complètement exposées ;
III - proposer un récipient de tapis (21) pouvant retenir l'eau ;
IV - poser un lit de matériau poreux inerte (25, 26) dans ledit récipient ;
V -poser lesdits composants de tapis sur ledit lit poreux ; et
VI - cultiver la culture végétale (23) desdits composants de tapis en l'arrosant et en la soumettant à des traitements qui sont généralement appliqués à la culture végétale, lorsqu'elle est cultivée d'une manière classique.

2. Procédé selon la revendication 1, dans lequel la couche (14) d'une culture végétale souhaitée est cultivée sur un sol naturel et les composants de tapis (40) sont produits en détachant les morceaux de la couche de culture végétale avec la couche de sol dans laquelle les racines de la culture sont enfoncés, et retirer ladite couche de sol desdits morceaux, ou dans lequel les racines sont prévues dans une forme libre de sol sensiblement propre, par n'importe quel procédé approprié.

3. Procédé selon la revendication 1, qui comprend l'étape consistant à évacuer le liquide du lit poreux (25, 26) à un niveau (23) situé entre la partie supérieure et la partie inférieure dudit lit, moyennant quoi on le divise en une couche inférieure contenant ledit liquide et une couche supérieure débarrassée dudit liquide.

4. Procédé selon la revendication 1, dans lequel la culture végétale (28) est choisie dans le groupe comprenant la pelouse et les végétaux horticoles.

5. Procédé selon la revendication 4, dans lequel les végétaux horticoles sont choisis dans le groupe comprenant les tomates, les pastèques et les melons.

6. Procédé selon la revendication 2, dans lequel le sol est retiré par pulvérisation à partir de la couche (14) de culture végétale.

7. Procédé selon la revendication 1, dans lequel les surfaces plates sont des surfaces artificielles.

8. Procédé selon la revendication 7, dans lequel la surface artificielle est une surface d'un bâtiment.

9. Procédé selon la revendication 1, dans lequel les morceaux de couches de culture végétale, et par conséquent les composants de tapis (20) correspondants ont une forme et des dimensions adaptées aux dimensions de la surface de culture végétale qui doit être créée.

10. Procédé selon la revendication 1, dans lequel chaque partie de culture végétale (28) a la même surface qu'un récipient de culture.

11. Procédé selon la revendication 1, dans lequel plusieurs parties de culture végétale qui se trouvent en butée les unes contre les autres, ont collectivement la même surface qu'un récipient (21) de culture.

12. Procédé selon la revendication 1, dans lequel le lit poreux (25, 26) se compose d'un matériau particulaire inerte.

13. Procédé selon la revendication 12, dans lequel le matériau particulaire inerte est choisi dans le groupe comprenant le tuf, la perlite, le leca ou des mélanges ou préparations de tels matériaux.

14. Procédé selon la revendication 13, dans lequel le matériau est déposé au moins dans deux rangées, la rangée inférieure ayant une taille particulaire plus grande que la rangée supérieure (26).

15. Procédé selon la revendication 1, dans lequel la culture végétale (28) est soumise, après avoir été mise en place, à des traitements qui sont généralement appliqués pour une culture similaire, lorsqu'elle est cultivée de manière classique.

16. Procédé selon la revendication 15, dans lequel les traitements comprennent l'application d'engrais.

17. Procédé selon la revendication 15, dans lequel les traitements comprennent l'application de désherbants et/ou de pesticides.

18. Procédé selon la revendication 1, comprenant en outre l'étape consistant à contrôler la température de l'eau utilisée pour arroser la culture végétale (28) afin de maintenir sa température dans des limites optimales.

19. Procédé selon la revendication 18, comprenant l'étape consistant à faire chauffer l'eau pendant la saison froide.

20. Appareil pour réaliser le procédé de création de surfaces de culture sur des surfaces de niveau, plates selon la revendication 1, qui comprend un récipient (21) et un lit de matériau (25, 26) particulaire et poreux inerte contenu à l'intérieur de celui-ci, dans lequel le récipient est prévu avec des ouvertures (23) d'évacuation afin de diviser ainsi le lit en une couche inférieure contenant l'eau ou une solution aqueuse et une couche supérieure qui est débarrassée de liquide, **caractérisé en ce qu'**un filet de tissu résistant à l'eau est placé dans ladite couche supérieure ou immédiatement au dessus de celle-ci.

21. Appareil selon la revendication 20, dans lequel les ouvertures (23) d'évacuation sont placées à une telle hauteur pour diviser le lit poreux en une couche inférieure ayant une profondeur comprise entre 1 et 5 cm et une couche supérieure ayant une profondeur comprise entre 5 et 15 cm.

22. Appareil selon la revendication 20, comprenant en outre des moyens d'arrosage.

23. Appareil selon la revendication 20, dans lequel le lit (25, 26) poreux comprend au moins deux rangées de matériaux poreux inertes.

24. Appareil selon la revendication 20, dans lequel les matériaux poreux inertes sont choisis dans le groupe comprenant le tuf, la perlite, le leca ou des préparations ou mélanges de tels matériaux.

25. Appareil selon la revendication 20, comprenant en outre des moyens pour contrôler la température des contenus du récipient et des racines de la culture végétale, chaque fois que la saison le demande.

26. Appareil selon la revendication 25, dans lequel les moyens de contrôle de température comprennent un dispositif de chauffage (30), un échangeur de chaleur (31) pour chauffer l'eau à la température souhaitée, et un système de tuyaux qui amène l'eau chauffée vers les positions appropriées dans le récipient (21).

27. Appareil selon la revendication 20, comprenant en outre des moyens pour introduire des engrais.

28. Appareil selon la revendication 27, dans lequel les moyens pour introduire des engrais comprennent des tuyaux (27) ayant des ouvertures supérieures pour recevoir les engrais et des ouvertures inférieures pour permettre aux engrais de se mélanger avec le contenu du récipient.

29. Appareil selon la revendication 20, dans lequel le récipient (21) comprend un fond (22) et un bord (22') constitués par des parois latérales.

30. Appareil selon la revendication 29, dans lequel le fond (22) et le bord (22') du récipient ne sont pas raccordés de manière structurelle.

31. Appareil selon la revendication 29, dans lequel le fond (22) du récipient est constitué par une feuille résistant à l'eau.

32. Appareil selon la revendication 29, dans lequel le fond (22) du récipient est constitué par une zone étanche à l'eau d'une surface de bâtiment.

33. Utilisation d'un matériau (25, 26) particulaire pour réaliser le procédé de création de surfaces de culture sur des surfaces de niveau plates selon la revendication 1, dans laquelle ledit matériau particulaire est déposé dans une seule rangée (26) prévue avec une structure en maille qui peut avoir une surface qui représente une fraction de la surface du tapis de verdure.

34. Utilisation d'une rangée (26) de matériau particulaire selon la revendication 33 dans la création d'un élément modulaire de tapis de verdure (20), dans lequel la verdure a des racines qui sont entrelacées dans ladite rangée (26) de matériau particulaire.
